# EUROPEAN PATENT SPECIFICATION

(11) **EP 0 557 095 B1**
(45) Date of publication and mention of the grant of the patent: **28.08.1996**
(21) Application number: 93301198.3
(22) Date of filing: 18.02.1993
(51) Int. Cl.: H04N 5/14, H04N 5/232

(54) **Movement vector detecting device**
Vorrichtung zur Detektion von Bewegungsvektoren
Dispositif de détection de vecteur de mouvement

(30) Priority: 21.02.1992 JP 34596/92
(43) Date of publication of application: 25.08.1993
(60) Divisional application: 95203154.0
(73) Proprietor: CANON KABUSHIKI KAISHA, Tokyo (JP)
(72) Inventor: Kondo, Toshiaki, c/o Canon Kabushiki Kaisha, Tokyo (JP); Sekine, Masayoshi, c/o Canon Kabushiki Kaisha, Tokyo (JP)
(74) Representative: Beresford, Keith Denis Lewis

(56) References cited:
- EP-A- 0 454 442
- IEEE TRANSACTIONS ON CONSUMER ELECTRONICS vol. 36, no. 3, August 1990, NEW YORK US pages 510 - 519 UOMORI ET AL. 'Automatic Image Stabilizing System by Full-Digital Signal Processing'
- PROCEEDINGS OF THE THIRD INTERNATIONAL WORKSHOP ON HDTV; 30 AUGUST-1 SEPTEMBER 1989; TURIN, IT pages 117 - 123 DABNER 'Real Time Motion Vector Measurement Hardware'

## Description

### BACKGROUND OF THE INVENTION

### Field of the Invention

The present invention relates to a movement vector detecting device, and more particularly to a device for detecting a movement vector from an image signal.

### Related Background Art

The movement vector detecting device has been employed in the image encoding device or the image vibration compensating device. For movement vector detection by image signal processing, there have been known a time-space inclination method disclosed for example in the U.S. Patent No. 3,890,462 and in the Japanese Patent Publication No. 60-46878, a correlation method based on calculation of correlation, and a block matching method.

In the time-space inclination method, the amount of movement is calculated from the difference d in luminance between frames (or fields) and the difference Δ between pixels in a frame. There is utilized a property that the image signal of a moving image is an average in time with a field cycle time, and that the edge becomes less sharp and the difference Δ in luminance among pixels becomes smaller as the amount of movement of image becomes larger. The amount of movement is defined by d/Δ, namely the difference d in luminance among frames or fields, normalized by the difference Δ in luminance among pixels. The details of the time-space inclination method are described by B. K. P. Horn et al., Artificial Intelligence 17, p.185 - 203 (1981).

The block matching method consists of dividing the input image signal into blocks of a suitable size (for example 8 pixels by 8 lines), comparing each block with the pixels of a predetermined area in a preceding frame (or field) and determining the most resembling position by laterally moving the comparing position within the image frame. For example there is searched a position where the sum, within the block, of absolute difference of pixels between the frames (or fields), and the movement vector is represented by the relative displacement of the most resembling blocks. The details of the block matching calculation are reported by M. Ogami et al., Information Processing, Vol. 17, No. 7, p.634 - 640 July, 1976.

In these methods, however, it has been difficult to exactly detect the movement vector, or the detected movement vector has not been reliable, in case the unit block for movement vector detection contains only low spatial frequencies and lacks characteristic pattern (such as sky, water surface, white wall or asphalt surface), or in case said unit block contains a plurality of similar characteristic points with a high spatial frequency (such as flower field, leaves of a tree or a door with grid pattern), or in case an object having the edge only in a specified direction (such as an oblong rod) moves along the direction of said edge.

If a high-efficiency image encoding device or an image vibration compensating device is operated according to an erroneous movement vector or a movement vector involving a large error, the precision of encoding or compensation is significantly deteriorated, and the image quality may become even worse by such encoding or compensation.

In the field of vibration detection and vibration compensation utilizing the movement vector, the present applicant already has the following granted US patents:

U.S. Patent Nos. 5,198,896, 5,189,513, 5,173,770, 5,296,925, 4,695,892, 5,012,270 and 5,107,293.

### SUMMARY OF THE INVENTION

The present invention is to resolve the above-mentioned drawbacks of the prior art, and is concerned with providing a movement vector detecting device capable of accurately detecting the movement regardless of the state of the image.

The present invention is also concerned with providing a vibration compensating device capable of accurately detecting the movement vector of an object image regardless of the pattern thereof, and enabling the realisation of optimum movement compensating characteristics without erroneous operations.

The present invention is additionally concerned with providing a camera constantly capable of accurate compensation for vibration regardless of the state of the object to be photographed.

An article in IEEE Transactions on Consumer Electronics, Vol. 36, No 3, August 1990, Uomori et al. "Automatic Image Stabilizing System by Full-Digital Signal Processing" discloses the use of phase correlation in motion vector detection, and EP-A-0,454,442 (US-A-5 189 513) discloses motion vector detection by correlating phase differences of zero crossing points.

Accordingly, the present invention comprises a movement vector detecting device as set out in claim 1.

### BRIEF DESCRIPTION OF THE DRAWINGS

Fig. 1 is a block diagram of an embodiment of the present invention;
Fig. 2 is a view showing the relation between the spatial frequency and binary patterns;
Figs. 3A and 3B are views for explaining binary patterns;
Fig. 4 is a chart showing an example of the evaluation function;
Figs. 5A to 5C are charts showing the principle of edge detection by the zero crossing method; and
Fig. 6 is a view showing a binary pattern having edges periodically on a vertical line.

### DETAILED DESCRIPTION OF THE PREFERRED EMBODIMENTS

Now the present invention will be clarified in detail by an embodiment thereof shown in the attached drawings.

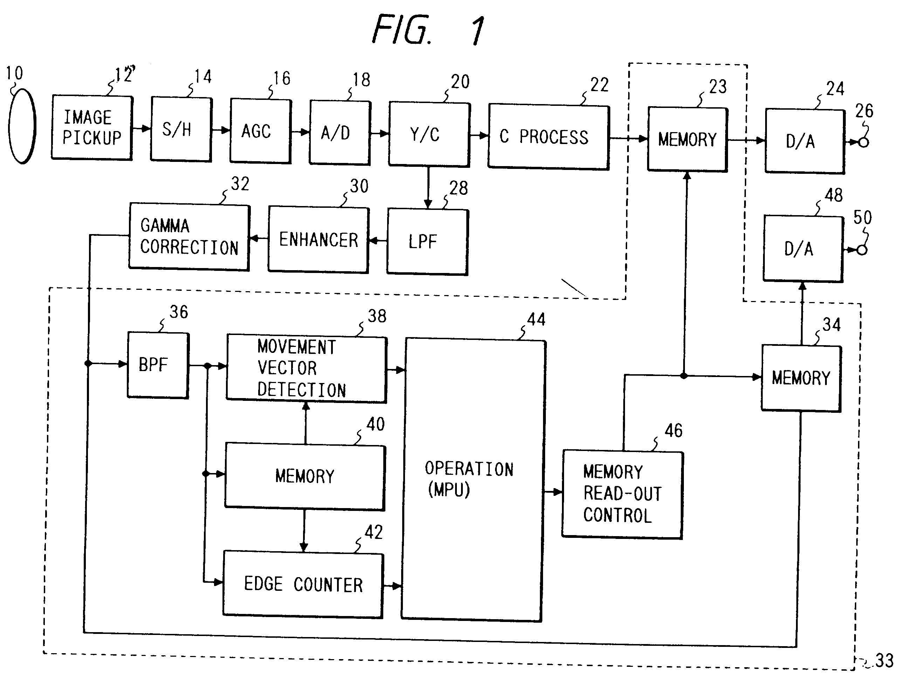

Fig. 1 is a block diagram of a video camera with an antivibration device, constituting an embodiment of the present invention. In this embodiment, the vibration of image is suppressed by storing the phototaken image signal of an image frame in an image memory, and controlling the read-out range from said image memory according to the detected movement vector.

In Fig. 1, an image pickup device 12 converts an object image, formed by a phototaking lens 10, into an electrical signal. In the present embodiment, the image pickup device 12 releases a line-sequential color difference image signal. The output of said image pickup device 12 is supplied, through a sample hold (S/H) circuit 14, to an AGC (automatic gain control) circuit 16. Which automatically regulates the gain of the output signal of the S/H circuit 14 and of which output is converted into a digital signal by an A/D converting circuit 18.

A Y/C separation circuit 20 is composed of two 1H delay lines and an adder for adding the input and a 2H delayed signal. The output of said adder is supplied to a C process circuit 22 constituting a color signal processing circuit, while a 1H delayed signal is supplied to a low-pass filter (LPF) 28 of a luminance signal processing system. The C process circuit 22 generates a chroma signal from the output of the Y/C separation circuit 20, and its output is temporarily stored in a memory 23 in an image vibration suppressing circuit 33 to be explained later.

In the luminance signal processing system, the LPF 28 eliminates the carrier component of the line-sequential color difference signal, from the signal supplied from the Y/C separation circuit 20. The output of the LPF 28 is supplied to an enhancer 30 for edge enhancement. The enhancer 30 normally adds, to the input signal, a secondary differentiated signal thereof. A gamma correction circuit 32 avoids the saturation in the high-light area and widens the dynamic range, on the output of the enhancer 30. The ordinary luminance signal process is completed in this manner, and the output of the gamma correction circuit is supplied to the image vibration suppressing circuit 33.

In said image vibration suppressing circuit 33, the output of the gamma correction circuit 32 is supplied to a field (or frame) memory 34 and a band-pass filter (BPF) 36 consisting of a spatial frequency filter. A memory 34 temporarily stores the entered luminance signal. The BPF 36 extracts, from the output of the gamma correction circuit 32, spatial frequency components useful for movement vector detection. Thus the low and high spatial frequency components are eliminated from the image signal.

In the present invention, the BPF 36 releases the code bit of the digital output signal of the gamma correction circuit 32. This corresponds to the binarization of the luminance signal, employing the DC level as the threshold value. Thus, the circuits succeeding to the BPF 36 can be composed of 1-bit processing system and can therefore be compactized.

The output of the BPF is supplied to a movement vector detecting circuit 38, a memory 40 serving as 1-field time delay means and an edge counter 42. Said movement vector detecting circuit 38 also receives the signal of the preceding field from the memory 40, and detects the movement vector by the calculation according to the time-space inclination method or by the correlation calculation, based on the current field and the preceding field.

The edge counter 42 counts the number of edges in the horizontal and vertical directions contained in each unit block for movement vector detection in the movement vector detecting circuit 38. More specifically, it detects the inversion of output of the BPF 36, by taking exclusive logic sum between the neighboring pixels.

The movement vector (horizontal and vertical components) detected by the movement vector detecting circuit 38, and the number of edges in each block, detected by the edge counter 42, are supplied to an operation circuit 44 composed of a microcomputer, which evaluates the reliability of the movement vector in each block, by the number of edges in the same block. More specifically, the movement vectors respectively detected in the blocks constituting the detection units for the movement vector are weighted by the number of detected edges, and the movement vector for the entire image frame is detected, as will be explained later in more details.

The operation circuit 44 supplies the calculated movement vector to a memory read-out control circuit 46, which, in response, controls read-out control circuit 46, which, in response, controls the read-out positions of the memories 23, 34 so as to cancel the image movement.

The chroma signal read from the memory 23 is converted into an analog signal by a D/A converter 24, and is released from an output terminal 26. Also the luminance signal read from the memory 34 is converted into an analog signal by a D/A converter 48, and is released from an output terminal 50. In this manner, the image signal with suppressed image vibration is released from said output terminals 26, 50.

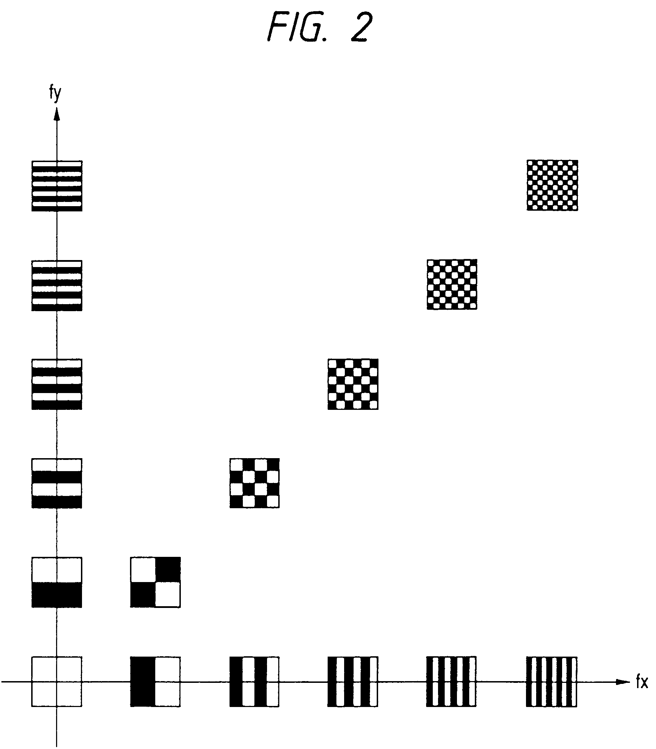

In the following there will be given a detailed explanation on the calculation in the operation circuit 44, namely the evaluation of reliability of the movement vector, with reference to Figs. 2, 3A, 3B and 4. Fig. 2 shows an orthogonal coordinate system representing the spatial frequency area, wherein the abscissa fx indicates the horizontal spatial frequency while the ordinate indicates the vertical spatial frequency. Pattern shown on the coordinate system indicates a binary pattern corresponding to the spatial frequency of the illustrated position. In general, the spatial frequency distribution of an image assumes a cross-shape pattern with limited diagonal components.

In the movement vector in general, the component of movement in a direction orthogonal to the direction of edge (tangential direction) of the image can be detected with satisfactory precision, but the component in the direction of edge is difficult to detect, with low reliability of detected value. Also in the direction orthogonal to the edge, the reliability becomes low if the periodical pattern exists in said direction, because of the possibility of mismatching.

For example, in case of an edge extending in the vertical (y) direction, the x component of the movement vector is detectable, but y component is not detectable. In case of a rough pattern as shown in Fig. 3A, with a block size of 10 x 10 pixels, there are observed 10 edges in the x-direction and 0 edges in the y-direction. In such case, the detected value of y-component of the movement vector is unreliable.

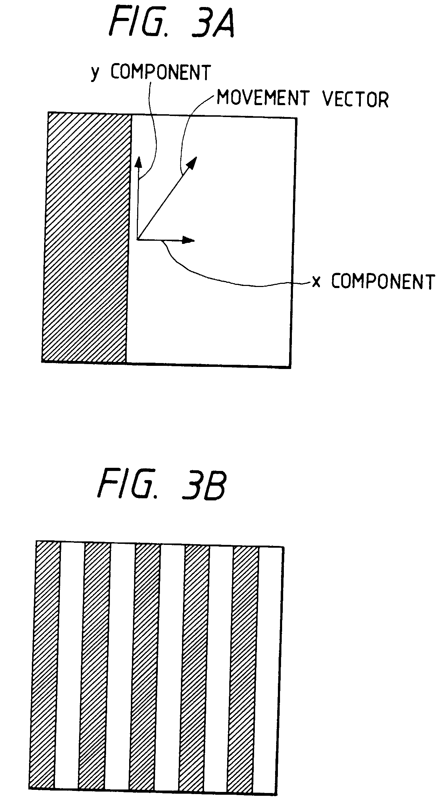

Also in case of a pattern shown in Fig. 3B, with a higher spatial frequency with periodicity in the x-direction, the detected value in the y-direction is unreliable because there is no edge in the y-direction as in the case of Fig. 3A. The reliability becomes also low in the x-direction, because of the possible mismatching resulting from the periodicity. If a block size of 10 x 10 pixels is employed for the pattern of Fig. 3B, there are obtained 90 (= 9 x 10) edges in the x-direction and 0 edge in the y-direction. The detected value in the x-direction is unreliable because of too many edges, and the detected value in the y-direction is also unreliable because of absence of edge.

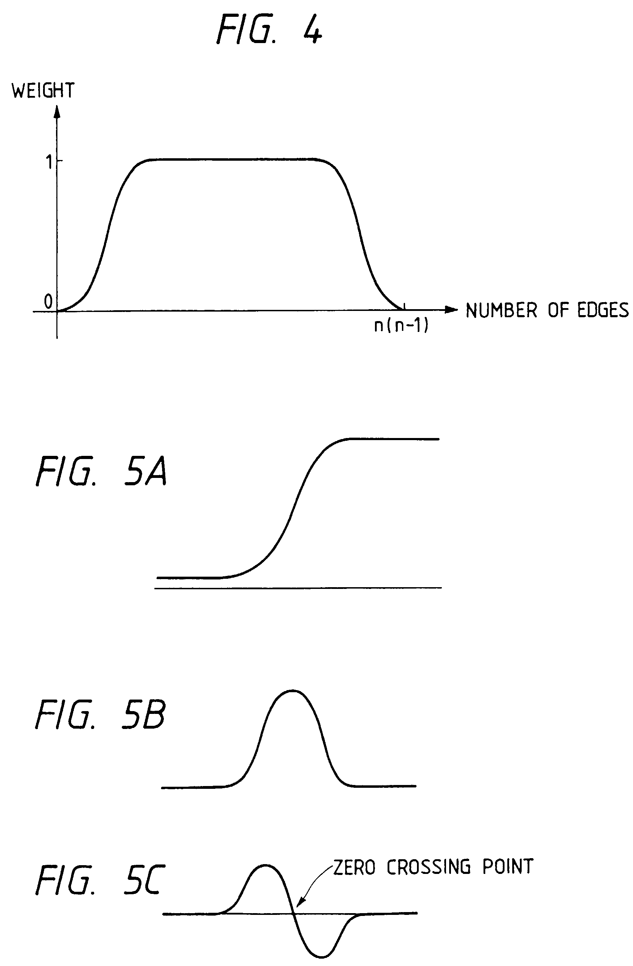

Fig. 4 shows an example of the weighting function (evaluating function) for the number of detected edges, wherein n indicates the block size in the x- and y-directions. The maximum number of edges in a block of n x n pixels is n(n - 1) in each of the x and y direction. When the number of edges is close to zero, the evaluation is low because the effective information for movement vector detection is deficient. On the other hand, the evaluation is also low if the number of edges is very large, because mismatching can happen easily. The operation circuit 44 evaluates the x- and y-components of the detected movement vectors, individually utilizing said weighting function, and effects a process of averaging similar movement vectors with weights in a closed output area and eliminating the movement vectors of low reliability.

In the foregoing embodiment, the edge is judged from a particular spatial frequency component extracted by the two-dimensional BPF 36, but it is naturally possible also to count the edges of boundaries or contours by extracting edge information from multi-value image signal. Direct edge detection from the luminance signal can be achieved by the zero-crossing method, in which the edge is detected by secondary differentiation of the luminance signal, as detailedly reported by D. Marr and E. Hildreth in "Theory of Edge Detection", Proceeding of the Roval Society of London, B207, 1980, pp187 - 217.

Fig. 5A shows an edge part of an image, while Fig. 5B shows a differential of the signal shown in Fig. 5A, and Fig. 5C shows a differential of the signal shown in Fig. 5B, or a second-order differential of the signal shown in Fig. 5A. The wave form of said second-order differential shown in Fig. 5C inverts the sign at the center of the edge, and said sign inverting point is called zero crossing point. Thus the edges can be detected in the horizontal and vertical directions, by effecting second-order differentiation in said directions. The reliability of the detected movement vector can be evaluated also by the edges detected by such zero crossing method.

There have also been proposed other types of edge detectors, which are likewise applicable to the present invention. For example there are already known Roberts' edge detector reported by L. G. Roberts, "machine perception of three-dimensional solids", in Optical and Electro-optical Information Processing, and J. T. Tippett et al. (eds,), MIT Press, Cambridge, Mass., 1965, pp.159 - 197, and Prewitt's edge detector reported by J. M. S. Prewitt, "object enhancement and extraction" in Picture Processing and Psychopictorics; and B. S. Lipkine and A. Rosenfeld (eds.), Academic Press, New York, 1970.

As will be easily understood from the foregoing description, the reliability of plural detected movement vector values is evaluated by the numbers of edges detected in respective blocks, so that a movement vector of high reliability and high precision can be obtained in the entire image area or in a suitable closed area. Consequently there can be obtained satisfactory performance in the moving image encoding device or in the image vibration compensating device.

## Claims

1. A movement vector detecting device comprising block dividing means (44) for dividing an image frame into plural blocks,
movement vector detecting means (38, 40) for detecting a movement vector in each of said plural blocks,
CHARACTERISED IN THAT there is additionally provided
edge detection means (40, 42) for detecting edges in said image frame; and
evaluation means (44) for evaluating the reliability of the movement vector detected by said movement vector detecting means, based on the number of edges in each block detected by said edge detection means.

2. A device according to claim 1, wherein said edge detection means is adapted to count the number of edges in the vertical and horizontal directions in each of said blocks.

3. A movement vector detecting device according to claim 1 or claim 2, wherein said evaluating means is adapted to calculate the movement vector of the entire image frame by weighting the movement vector in each of said blocks by the information on said number of edges.

4. A device according to any preceding claim, wherein said movement vector detecting means includes filter means (36) for extracting frequency components suitable for the detection of said movement vector, and eliminating unnecessary low and high frequency components.

5. A device according to claim 4, and including a Y/C separation circuit (20) for generating a luminance signal, and wherein said filter means is adapted to binarize the luminance signal, utilising a predetermined DC level as the threshold value.

6. A device according to any preceding claim, further comprising compensating means (46) for compensating the movement of image, based on the movement vector information evaluated by said evaluating means.

7. A device according to claim 6, further comprising an image memory (23) for storing an image, wherein said compensating means is adapted to cancel the movement of the image, by shifting the image read-out range of said image memory, based on the movement vector of the entire image frame evaluated by said evaluating means.

8. A device according to either claim 6 or claim 7, further comprising operation means (44) for varying the weighting of the movement vector value detected by said movement vector detecting means, based on the number of edges in each block detected by said edge detection means, and calculating the movement vector for the entire image frame based on said weighted values.

9. A device according to claim 8, wherein said operation means is adapted to increase the weight for a block or blocks in which the number of edges detected by said edge detection means is within a predetermined range, and to decrease the weight for a block or blocks in which said number of edges is outside said predetermined range.

## Patentansprüche

1. Vorrichtung zur Erfassung von Bewegungsvektoren mit
einer Blockunterteilungseinrichtung (44) zur Unterteilung eines Vollbildes in mehrere Blöcke, und
Bewegungsvektor-Erfassungseinrichtungen (38, 40) zur Erfassung eines Bewegungsvektors in jedem der mehreren Blöcke,
**gekennzeichnet durch**
Kantenerfassungseinrichtungen (40, 42) zur Erfassung von Kanten in dem Vollbild, und
eine Bewertungseinrichtung (44) zur auf der Anzahl von durch die Kantenerfassungseinrichtungen erfaßten Kanten in jedem Block beruhenden Bewertung der Zuverlässigkeit des durch die Bewegungsvektor-Erfassungseinrichtungen erfaßten Bewegungsvektors.

2. Vorrichtung nach Anspruch 1,
**dadurch gekennzeichnet, daß**
die Kantenerfassungseinrichtungen die Anzahl von Kanten in vertikaler und horizontaler Richtung in jedem Block zählen.

3. Vorrichtung nach Anspruch 1 oder 2,
**dadurch gekennzeichnet, daß**
die Bewertungseinrichtung den Bewegungsvektor des gesamten Vollbildes durch Gewichtung des Bewegungsvektors in jedem Block mit den Informationen bezüglich der Kantenanzahl berechnet.

4. Vorrichtung nach einem der vorangehenden Ansprüche,
**dadurch gekennzeichnet, daß**
die Bewegungsvektor-Erfassungseinrichtungen eine Filtereinrichtung (36) zur Extraktion von zur Erfassung des Bewegungsvektors geeigneten Frequenzanteilen und zur Beseitigung von unnötigen niedrigen und hohen Frequenzanteilen enthalten.

5. Vorrichtung nach Anspruch 4,
**gekennzeichnet durch**
eine Luminanz-/Chrominanz-Trennschaltung (20) zur Erzeugung eines Luminanzsignals, wobei die Filtereinrichtung das Luminanzsignal unter Verwendung eines vorbestimmten Gleichspannungspegels als Schwellenwert binarisiert.

6. Vorrichtung nach einem der vorangehenden Ansprüche,
**gekennzeichnet durch**
eine Kompensationseinrichtung (46) zur Kompensation der Bildbewegung beruhend auf der durch die Bewertungseinrichtung bewerteten Bewegungsvektorinformation.

7. Vorrichtung nach Anspruch 6,
**gekennzeichnet durch**
einen Bildspeicher (23) zur Speicherung eines Bildes, wobei die Kompensationseinrichtung die Bildbewegung beseitigt, indem der Bild-Auslesebereich des Bildspeichers auf dem durch die Bewertungseinrichtung bewerteten Bewegungsvektor des gesamten Vollbildes beruhend verschoben wird.

8. Vorrichtung nach Anspruch 6 oder 7,
**gekennzeichnet durch**
eine Funktionseinrichtung (44) zur auf der durch die Kantenerfassungseinrichtungen erfaßten Kantenanzahl in jedem Block beruhenden Veränderung der Gewichtung des durch die Bewegungsvektor-Erfassungseinrichtungen erfaßten Bewegungsvektorwerts und zur auf den gewichteten Werten beruhenden Berechnung des Bewegungsvektors für das gesamte Vollbild.

9. Vorrichtung nach Anspruch 8,
**dadurch gekennzeichnet, daß**
die Funktionseinrichtung das Gewicht für einen Block oder für Blöcke erhöht, in denen die durch die Kantenerfassungseinrichtungen erfaßte Kantenanzahl innerhalb eines vorbestimmten Bereichs liegt, und das Gewicht für einen Block oder für Blöcke verringert, in denen die Kantenanzahl außerhalb des vorbestimmten Bereichs liegt.

## Revendications

1. Dispositif de détection de vecteurs de déplacement comprenant des moyens (44) de division en blocs pour diviser un cadre d'image en plusieurs blocs,
des moyens (38,40) de détection de vecteurs de déplacement pour détecter un vecteur de déplacement dans chaque bloc de ladite pluralité de blocs,
caractérisé en ce qu'il est en outre prévu
des moyens (40,42) de détection de bords pour détecter des bords dans ledit cadre d'image; et
des moyens d'évaluation (44) pour évaluer la fiabilité du vecteur de déplacement détecté par lesdits moyens de détection de vecteurs de déplacement, sur la base du nombre de bords dans chaque bloc détecté par lesdits moyens de détection de bords.

2. Dispositif selon la revendication 1, dans lequel lesdits moyens de détection de bords sont adaptés pour compter le nombre de bords dans les directions verticale et horizontale dans chacun desdits blocs.

3. Dispositif de détection de vecteur de déplacement selon la revendication 1 ou 2, dans lequel lesdits moyens d'évaluation sont adaptés pour calculer le vecteur de déplacement de l'ensemble du cadre d'image par pondération du vecteur de déplacement dans chacun desdits blocs, au moyen de l'information concernant ledit nombre de bords.

4. Dispositif selon l'une quelconque des revendications précédentes, dans lequel lesdits moyens de détection de vecteurs de déplacement comprennent des moyens formant filtre (36) pour extraire des composantes de fréquences convenant pour la détection dudit vecteur de déplacement, et éliminer des composantes de hautes et basses fréquences inutiles.

5. Dispositif selon la revendication 4, et incluant un circuit de séparation Y/C (20) pour produire un signal de luminance, et dans lequel lesdits moyens formant filtre sont adaptés pour binariser le signal de luminance, en utilisant un niveau prédéterminé de courant continu en tant que valeur de seuil.

6. Dispositif selon l'une quelconque des revendications précédentes, comprenant en outre des moyens de compensation (46) pour compenser le déplacement de l'image, sur la base de l'information du vecteur de déplacement évaluée par lesdits moyens d'évaluation.

7. Dispositif selon la revendication 6, comprenant en outre une mémoire d'image (23) pour mémoriser une image, lesdits moyens de compensation étant adaptés pour annuler le déplacement de l'image, au moyen d'un décalage de la gamme de lecture d'image de ladite mémoire d'images, sur la base du vecteur de déplacement de l'ensemble du cadre d'image évalué par lesdits moyens d'évaluation.

8. Dispositif selon l'une des revendications 6 ou 7, comprenant en outre des moyens opérationnels (44) pour modifier la pondération de la valeur du vecteur de déplacement détectée par lesdits moyens de détection de vecteurs de déplacement, sur la base du nombre de bords, dans chaque bloc, détectés par lesdits moyens de détection de bords, et calculer le vecteur de déplacement pour l'ensemble du cadre d'image sur la base desdites valeurs pondérées.

9. Dispositif selon la revendication 8, dans lequel lesdits moyens opérationnels sont adaptés pour augmenter le poids d'un bloc ou de blocs dans lesquels le nombre de bords détectés par lesdits moyens de détection de bords se situe dans une gamme prédéterminée, et pour réduire le poids d'un bloc ou de blocs dans lesquels ledit nombre de bords se situe en dehors de ladite gamme prédéterminée.
